# EUROPEAN PATENT SPECIFICATION

(11) **EP 4 395 996 B1**
(45) Date of publication and mention of the grant of the patent: **07.10.2026**
(21) Application number: 22768980.9
(22) Date of filing: 30.08.2022
(51) Int. Cl.: B29C 65/02, B29C 70/70, G02C 5/00, G02C 5/14, G02C 11/00, B29C 65/00

(54) **METHOD FOR ENCAPSULATING AT LEAST ONE PORTION OF AN ELECTRONIC DEVICE INSIDE AT LEAST ONE ELEMENT OF A GLASSES FRAME**
VERFAHREN ZUM EINKAPSELN VON MINDESTENS EINEM TEIL EINES ELEKTRONISCHEN GERÄTS IN MINDESTENS EINEM ELEMENT EINES BRILLENGESTELLS
PROCÉDÉ D'ENCAPSULATION D'AU MOINS UNE PARTIE D'UN DISPOSITIF ÉLECTRONIQUE À L'INTÉRIEUR D'AU MOINS UN ÉLÉMENT D'UNE MONTURE DE LUNETTES

(30) Priority: 02.09.2021 IT 202100022775
(43) Date of publication of application: 10.07.2024
(73) Proprietor: Luxottica S.r.l., 32021 Agordo (BL) (IT)
(72) Inventor: BORSOI, Fabio, 31029 Vittorio Veneto (TV) (IT); FANDELLA, Gianluca, 32100 Belluno (BL) (IT); VENTURI, Davide, 40131 Bologna (BO) (IT); MICHELON, Dino, 32014 Ponte nelle Alpi (BL) (IT)
(74) Representative: Biallo, Dario
(86) International application number: PCT/IB2022/058103
(87) International publication number: WO 2023/031780

(56) References cited:
- US-A1- 2007 254 140
- US-A1- 2017 176 776
- SPEX MAGAZINE: "Construction processes for sheets made of synthesized material", 21 June 2017 (2017-06-21), XP055915079, Retrieved from the Internet <URL:http://spexmagazine.com/en/184-2/> [retrieved on 20220425]
- MG CHEMICALS: "Conformal Coatings", 11 June 2021 (2021-06-11), XP055914793, Retrieved from the Internet <URL:https://www.mgchemicals.com/downloads/category-data-sheets/CDS-Conformal%20Coatings.pdf> [retrieved on 20220422]
- BAO CONGYU: "Cellulose acetate / plasticizer systems : structure, morphology and dynamics", 25 August 2015 (2015-08-25), XP055914840, Retrieved from the Internet <URL:https://tel.archives-ouvertes.fr/tel-01186696/document> [retrieved on 20220422]

## Description

The present invention relates to a method of encapsulating at least one portion of an electronic device inside at least one element of a glasses frame.

In the state of the art, glasses are known having at least one portion of the frame that comprises electronic devices.

Known methods for incorporating electronic devices inside a portion of the glasses frame consist of starting with two rigid sheets of cellulose acetate that will constitute the frame portion, wherein the sheets are composed solely of polymer, plasticizer and any additives. At least one of two plastic surfaces of the two sheets is hollowed out by removing material, creating a cavity capable of housing at least some of the electronic elements of the electronic device. The latter are deposited in the volume of the cavity thus created and the two sheets are then joined together. The joining of the two parts of cellulose acetate can be carried out using different methods.

One such method, as for example explained in US10088695B2, involves the use of a solvent that is placed over the surface of at least one of the two portions of the sheets to be joined and the subsequent application of pressure in the direction perpendicular to a bonding plane and the application of a temperature adapted to allow the solvent to evaporate and the acetate to sinter, cementing the two sheets together. Other methods allow the coupling of the two sheets by applying sufficiently high temperatures and pressures to bring the plastic material at the two sheet surfaces above melting point. This allows the cellulose acetate to solidify into a single block once the temperature is lowered at the end of coupling.

Disadvantageously, encapsulated electrical devices must withstand pressure and temperature stress, but some components of electronic devices cannot withstand temperatures sometimes exceeding 100°C.

Another applicable methodological solution is to pressurize the two parts of the material and induce heating of the plastic material using radio frequencies, such as microwaves. The latter method allows more precise heating of only a superficial area of the two portions of the sheets to be joined up to the melting point.

Disadvantageously, encapsulation methods for electronic devices leave delamination and marks of poor aesthetic quality that could lead to cracks and breakage of the frame.

The object of the present invention is to realize a glasses frame in which at least one portion of an electronic device is encapsulated inside at least one element of a glasses frame by overcoming the disadvantages of the prior art, realizing a better encapsulation that does not leave any marks and wherein the frame is more resistant and flexible and more resistant to delamination phenomena.

The invention relates to a method of encapsulating at least one portion of an electronic device inside at least one element of a glasses frame that overcomes the drawbacks of the prior art.

According to the invention, this object is achieved by a method according to the independent claim 13.

Other features are provided in the dependent claims.

The features and advantages of the present invention will be more apparent from the following description, which is to be understood as exemplifying and not limiting, with reference to the appended schematic drawings, in which:
figure 1 is a side view of a portion of an element of a glasses frame which encapsulates inside it a portion of an electronic device and which is obtained according to the method of the invention;
figure 2 is a schematic view of one step of inserting said portion of the electronic device between two sheets which, once sintered, will constitute the portion of the frame element that incorporates the portion of the electronic device within itself;
figure 3 is a schematic view of a rigid electronic card, which is a portion of the electronic device mounted with a mechanically coupled metal core (rail, pocket, interlocking) ;
figure 4 shows another flexible printed circuit (FPC) glued onto the metal core;
figure 5 shows an electronic card with a metal core.

With reference to the aforementioned figures, a glasses frame 10 comprising at least one portion of an electronic device 20 encapsulated within an element 11 of the glasses frame 10 is shown by means of a method of encapsulating at least one portion of said electronic device 20 inside at least one element 11 of a glasses frame 10.

An element 11 means, for example, a nose pad, a bridge or an arm of the glasses frame 10.

In the figures the electronic device 20 comprises a portion encapsulated inside at least one portion 12 of the element 11 of the frame 10 and a portion protruding at least partially outside 21.

The portion protruding at least partially outside 21 of the element 11 is, for example, a connector for supplying power to the electronic device 20 or a connector for data exchange with the electronic device 20.

Said at least one element 11 of said glasses frame 10 is comprised of a mixture of plasticized cellulose acetate suitable for passing from a first composition to a second composition.

Said first composition of said plasticized cellulose acetate mixture comprises a solvent dissolved in the mixture.

Preferably the solvent dissolved in the first mixture is comprised in a list including at least one from acetone, ethanol, ethyl acetate, ethyl lactate.

This first composition comprising plasticized cellulose acetate and solvent comprises a lower softening point than the softening point of plasticized cellulose acetate alone.

Said second composition of said mixture provides that at least one portion 12 of said at least one element 11 inside which said at least one portion of said electronic device 20 is incorporated comprises a negligible mass percentage of solvent of less than 2% by weight. It is to be understood that this negligible mass percentage value should be understood merely as an example, and not as limiting the invention.

The inventive method, for realizing the frame 10 described and claimed, comprises steps in temporal succession.

The method comprises a first step wherein said at least one element 11 of said glasses frame 10 comprises two elements 111, 112 arranged in a plane and separated, both made of said first composition of said mixture. More generally said two elements 111, 112 can be defined as sheets.

Following the first step, the method provides for a second step involving the insertion of said at least one portion of said electronic device 20 between said two separate sheets 111, 112.

Thereafter, the method comprises a third step comprising increasing a temperature to the softening point of said mixture comprising at least one from plasticized cellulose acetone and solvent present in said at least one portion 12 of said at least one element 11 and applying a contact pressure between said two separate sheets 11, 112.

Subsequently the method comprises a fourth step providing waiting for a period of time sufficient to allow the two separate and partially softened sheets 111, 112 to encapsulate between them said at least one portion of said electronic device 20.

Partial softening refers to the fact that the solvent gives the first mixture a lower softening temperature than the softening temperature of the plasticized cellulose acetate, so not all of the material is sintered and a part of it softens.

Subsequently the method comprises a fifth step providing that said at least one solvent evaporates by passing the composition of the mixture of said at least one portion 12 of said at least one element 11 from the first to the second composition by completing sintering between the two sheets 111, 112 and encapsulating said at least one portion of electronic device 20 inside said at least one portion 12 of said at least one element 11.

Once said at least one portion of said electronic device 20 is encapsulated inside said at least one portion 12 of said at least one element 11 of the frame 10 it will be noted that said at least one portion 12 of said at least one element 11 inside which at least one portion of said electronic device 20 is encapsulated comprising a negligible mass percentage of solvent.

This method is derived from the use of a specific production technology for plasticized cellulose acetate elements, called Complex Solvent Block. In this type of process, the pure cellulose acetate polymer powder is mixed with plasticizer and one or more solvents, which are capable of solvating the polymer itself and any additives. The resulting formulation is mixed until obtaining a uniform mixture with the appearance of a viscous paste, rich in solvent inside. This paste can then be mechanically and thermally processed into various geometries, such as sheets 111, 112 and/or cubes of arbitrarily variable thickness and size, and generally other two- or three-dimensional geometries.

During this first step, it is also possible to introduce dyes of various kinds.

These elements are then mixed together in a mould, to which sufficient pressure and temperature are applied to ensure sintering into a single block; hence the nomenclature of solvent block. The resulting block still contains a high percentage of solvent in its matrix and can be sliced into sheets 111, 112 of arbitrary thickness and other geometries. These sheets 111, 112 are again coupled together by the application of temperature and pressure.

The applied temperature is far below the softening point of the plasticized cellulose acetate. In fact, the processing point of the plasticized acetate is comprised between 180 and 200 °C, while the applied temperature is less than 90 °C, as it is sufficient to leverage the solvent already present within the material to ensure that the polymer at the interface between two elements has sufficient mobility to penetrate into the surface, with which it is in contact. This whole methodology is therefore called Complex Solvent Block.

The second step of the method comprises inserting at least one portion of said electronic device 20 of any shape, even irregular, at least between two elements 111, 112 arranged in a plane, obtained from the first step and subsequently proceeding to the sintering of the fourth step after passing through the third heating step, thereby encapsulating said at least one portion of the electronic device 20 inside the polymer of said at least one portion 12 of said at least one element 11 of the glasses frame 10.

Advantageously, this method does not require a specific preparation of one of the two surfaces of said at least two elements 111, 112 obtained in one plane, e.g. by creating a cavity by exporting material as is performed in the technique of the prior art. In fact, the mixture of the first composition is a polymer rich in said solvent and has its own intrinsic flexibility and malleability, which allows the sheet 111, 112 of the mixture of the first composition to deform by accommodating the shape of the electronic device 20 inserted inside it and ensuring almost total absence of residual cavities. Once said at least one portion of the electronic device 20 is inserted between the two sheets 111, 112, in a configuration that could be described as "sandwich-like", they are subjected to heating and pressing according to the third step, causing all the material of the mixture of the first composition around the electronic device 20 to come into contact and lead to sintering in a single block. Advantageously, also in this third step of the method, the flexibility of the solvent-rich mixture absorbs a large part of the mechanical stress induced by the pressing of the two sheets 111, 112, preserving the integrity of the electronics 20 inside. Once the encapsulation of said at least one portion of the electronic device 20 has been completed, the portion 12 of element 11 thus obtained as a result of the fourth step behaves like a single block of material without discontinuity in the polymer matrix, excluding the volume occupied by the encapsulated electronic device 20.

According to the invention, a temperature of less than 90°C, and even more preferably comprised between 30°C and 50°C, and preferably a pressure of less than 3 bar, is used.

Following the fourth sintering step, the fifth step takes place in which the solvent is evaporated: this process can be conducted either under ambient conditions or in a heated environment to speed up the process.

Advantageously, once the solvent has evaporated from the plastic matrix making the mixture become a second composition, the mechanical behaviour of the material is comparable to that of plasticized and extruded cellulose acetate, including the stiffness of the latter.

This solvent is present in the mixture in a proportion comprised between 5% and 25% by mass.

Even more preferably, the percentage of said at least one solvent in the first composition of the acetate mixture is comprised between 10 and 15% by mass. Advantageously, this mass percentage of solvent in the first composition allows the solvated polymer paste to be processed in precise geometries, while retaining its flexibility and the possibility of low-temperature sintering.

The third step of increasing the temperature of said at least one portion 12 of the element 11 of the frame 10 requires the temperature to be less than 90°C.

The temperature less than 90°C corresponds to the softening point of the mixture according to the first composition comprising solvent.

Advantageously, this temperature range ensures that the electronics of the electronic device 20 are not damaged, in particular that any batteries of the electronic device 20 are not damaged.

The third step of the method provides for compressing the two sheets 111, 112 at a pressure comprised between 1.5 and 5 bar. Lower pressure leads to incomplete sintering between the two acetate mixture elements, while excessive pressure can result in damage to the electronics or an undesirable relative displacement between the acetate elements and the electronics themselves.

Advantageously, at the end of the fourth step of the method, the adhesion between the two sheets 111, 112 sintered to form said at least one portion 12 of the element 11 leaves no visible adhesion line, as the material is sintered with itself, due to the presence of solvent in the matrix and does not require the creation of pockets.

Due to the presence of solvent, the acetate cements itself, leaving no adhesion lines and creating a continuous and homogeneous material.

Exposing the electronics and battery of the electronic device 20 to high temperatures (80-90 °C) for long periods of time such as days or weeks could be detrimental, so it is advantageously envisaged that the fifth step provides for said at least one portion 12 of said at least one element 11 being dried at low temperatures to prevent possible premature ageing of the battery and so as not to ruin the connectivity and charging of the battery.

Low temperatures are defined as temperatures below the softening temperature of the first composition of the mixture.

The drying cycle takes no less than 5 days at low temperatures, also using a ventilated or vacuum oven.

The study of shrinkage phenomena is also taken into account.

At the end of the fifth step, a post-production step can be envisaged whereby said at least one portion 12 of the element 11 is in the form of an acetate sheet and is successfully flattened after deformation during the drying of the fifth step, preserving the electronics of the electronic device 20 encapsulated inside the element 11.

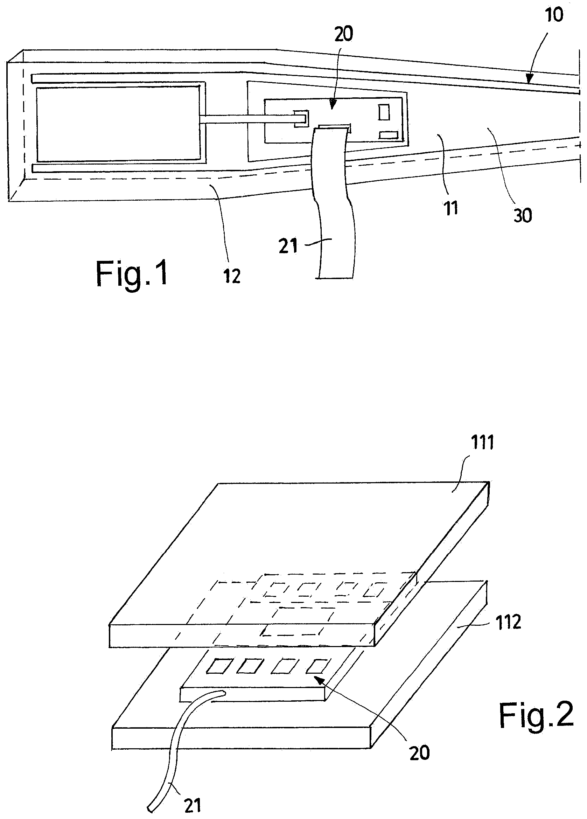

The post-production step provides that said at least one portion 12 of the element 11 once dry is processed around the encapsulated electronic device 20 to form the element 11 of the frame 10, for example an arm shape as shown in figure 1.

The third step was tested for example with calendered sheets 111, 112 comprising 15% solvent by mass at a softening temperature T comprised between 25-50 °C and a compression pressure P comprised between 0.5-2.5 bar for a time comprised between 0.5-2.5 hours.

Another test was carried out for pressed and cut sheets 111, 112 comprising 10% by mass of solvent at a softening temperature T comprised between 40-60 °C and a compression pressure P of both sheets 111, 112 comprised between 1 and 10 bar for a time comprised between 1 and 5 hours.

The thickness of the element 11 is finally controlled by several factors such as, for example, the size of the calendered/cut sheet, a thickness gauge applied during the sintering of the fourth step.

The thickness gauge is preferably comprised between 4 and 8 mm.

During the fifth step of drying, the sintered sheet of said at least one portion 12 of said at least one element 11 must be 10-20% thicker than the desired final size.

Finally, a final flattening is carried out, preferably using a second 4 mm thickness gauge.

Advantageously, once dried and flattened, the sheets of said at least one portion 12 of said at least one element 11 can be milled by processing around the encapsulated electronic device 20.

Even more preferably, the electronics of the electronic device 20 are covered with a protective material that can adequately protect the electronics from vibrations and extreme environments with a high concentration of chemical solvents.

The characteristics of the protective material are that it must initially be a low-viscosity fluid so that it completely fills the parts of the electronic device 20, prevents mechanical stress, is impermeable to sensitive reagents such as air or water, and is not corrosive to the electronics.

Curing of this protective material over the electronics takes place at a temperature of less than 60°C and requires an exothermic process and/or ultraviolet irradiation.

Once it has become solid after sintering, the protective material allows dimensional stability to be maintained.

The protective material is preferably polyurethane, which provides good dimensional stability, good adhesion to the mixture and is safe in contact with the skin.

Advantageously, the method involves covering said electronic device 20 with a protective material, preferably polyurethane, before the second step of the method.

The acetate frame 10 comprises a metal core inside to help limit deformations over time and to allow the shape of the frame itself to be adjusted, e.g. convexity, registration. Solutions that advantageously allow the addition of electronics without compromising this aspect couple an electronic element 20 to a metal structural element, with different construction techniques.

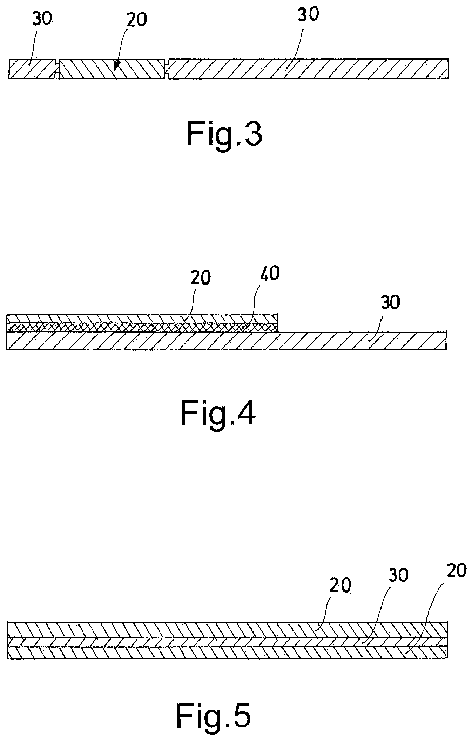

As shown in figure 3, the encapsulated portion of the electronic device 20 may be a rigid electronic card integral to a metal core 30 of the arm that is an element 11 of the frame 10 by means of mechanical coupling, such as a mechanical rail, pocket or interlocking coupling.

As shown in figure 4, the encapsulated portion of the electronic device 20 may be a flexible printed circuit, so-called FPC, glued by means of an adhesive 40 onto the metal core 30.

Figure 5 shows an electronic card with a metal core that itself acts as a core 30.

There are at least two tests for recognizing the finished frame 10 resulting from the method of the present invention.

The first test consists of detecting the presence of traces of solvent in negligible percentages in the portion 12 of element 11 of the frame 10 where the electronic device 20 is encapsulated, wherein these traces of solvent derive from the physical transformation of the first composition of said mixture into said second composition of said mixture according to the process described above.

The second test is that said at least one portion 12 of element 11 of the frame 10 encapsulating the electronic device 20 is advantageously free from pockets, steps and other junction points between the various portions of the element 11 of the frame 10 encapsulating said at least one portion of the electronic device 20. The portion of the electronic device 20 that is encapsulated inside, for example, the arm, which is one of the elements 11 of the frame 10, turns out to be perfectly encapsulated without being able to distinguish between the walls of the arm 11 and the electronics 20.

Alternatively, a multiplicity of electronic devices 20 can be encapsulated in one or more elements 11 of the glasses frame 10.

Alternatively, only one portion 12 of the element 11 may be made of said first mixture composition.

Alternatively, the first composition of the mixture can be provided to include a multiplicity of solvents with a softening point lower than that of the plasticized cellulose acetate.

The invention thus conceived is susceptible to many modifications and variants, all falling within the same inventive concept, as defined by the appended claims. In practice, the materials used, as well as their dimensions, can be of any type according to the technical requirements.

## Claims

1. Method of encapsulating at least one portion of an electronic device (20) inside at least one element (11) of a glasses frame (10),
wherein said at least one element (11) of said glasses frame (10) is comprised of a mixture of plasticized cellulose acetate suitable for passing from a first composition to a second composition,
wherein said first composition of said plasticized cellulose acetate mixture comprises at least one solvent dissolved in the mixture,
wherein said first composition has a softening point lower than a softening point of the plasticized cellulose acetate alone,
wherein said second composition of said mixture provides that at least a portion (12) of said at least one element (11) within which said at least a portion of said electronic device (20) is incorporated comprises a quantity of said at least one solvent lower than 2% by weight,
wherein said method comprises
a first step providing that said at least one element (11) of the glasses frame (10) comprises two separate sheets (111, 112) comprised of said first composition of said mixture,
a second step providing the insertion of said at least one portion of said electronic device (20) between said two separate sheets (111, 112),
a third step providing increasing a temperature up to the softening point of said first composition present in said at least one portion (12) of said at least one element (11) and applying a contact pressure between said two separate sheets (11, 112),
a fourth step providing waiting for a period of time sufficient to allow the two separate and partially softened sheets (111, 112) to encapsulate between them said at least a portion of said electronic device (20),
a fifth step providing evaporating said at least one solvent to pass the composition of the mixture of said at least one portion (12) of said at least one element (11) from the first to the second composition by carrying out a sintering between the two sheets (111, 112) and encapsulating said at least one portion of electronic device (20) inside said at least one portion (12) of said at least one element (11), wherein said at least one solvent is present in the first composition of the mixture in a percentage comprised between 5% and 25% by mass,
wherein the softening point of said first composition is lower than 90°C,
wherein the third step of the method provides for compressing the two sheets (111, 112) to a pressure between 1.5 and 5 bar.

2. Method according to claims 1, **characterized in that** the percentage of said at least one solvent in the first composition of the acetate mixture is comprised between 10% and 15% by mass.

3. Method according to any one of the preceding claims, **characterized in that** said at least one solvent is included in a list comprising at least one of acetone, ethanol, ethyl acetate, ethyl lactate.

4. Method according to any one of the preceding claims, **characterized in that** the softening point of said first mixture is comprised between 30°C and 50°C.

5. Method according to any one of the preceding claims, **characterized in that** the third step of the method provides for compressing the two sheets (111, 112) to a pressure of less than 3 bar.

6. Method according to any one of the preceding claims, **characterized in that** it comprises a post-production step providing that said at least one portion (12) of said at least one element (11) has a sheet-form is flattened during drying of the fifth step after said sheet had been deformed by the third and fourth step of the method.

7. Method according to claim 6, **characterized in that** said post-production step provides that said at least one portion (12) of said at least one element (11), once dry, is processed around the encapsulated electronic device (20) to realise the element (11) of the frame (10).

8. Method according to any one of the preceding claims, **characterized in that** said fifth step provides that said at least one portion (12) of said at least one element (11) is dried at low temperatures, by low temperatures being meant temperatures lower than the softening temperature of the first composition of the mixture.

9. Method according to any one of the preceding claims, **characterized in that** said at least one element (11) of glasses frame (10) is included in a list which providing a nose piece, a bridge, an arm of the glasses frame (10).

10. Method according to any one of the preceding claims, **characterized in that** said electronic device (20) is covered with a protective material, preferably polyurethane, before the second step of the method.

## Patentansprüche

1. Verfahren zum Verkapseln mindestens eines Teils eines elektronischen Geräts (20) innerhalb mindestens eines Elements (11) eines Brillengestells (10),
wobei das mindestens eine Element (11) des Brillengestells (10) aus einer Mischung von plastifiziertem Celluloseacetat besteht, die zum Überleiten von einer ersten Zusammensetzung zu einer zweiten Zusammensetzung geeignet ist,
wobei die erste Zusammensetzung der plastifizierten Celluloseacetatmischung mindestens ein in der Mischung gelöstes Lösungsmittel umfasst,
wobei die erste Zusammensetzung einen Erweichungspunkt aufweist, der niedriger als ein Erweichungspunkt des plastifizierten Celluloseacetats allein ist,
wobei die zweite Zusammensetzung der Mischung bereitstellt, dass mindestens ein Teil (12) des mindestens einen Elements (11), in dem der mindestens eine Teil des elektronischen Geräts (20) enthalten ist, eine Menge des mindestens einen Lösungsmittels umfasst, die geringer als 2 Gew.-% ist,
wobei das Verfahren Folgendes umfasst:
einen ersten Schritt, bei dem das mindestens eine Element (11) des Brillengestells (10) zwei separate Blätter (111, 112) umfasst, die aus der ersten Zusammensetzung der Mischung bestehen,
einen zweiten Schritt, bei dem der mindestens eine Teil des elektronischen Geräts (20) zwischen die beiden separaten Blätter (111, 112) eingelegt wird,
einen dritten Schritt, bei dem die Temperatur bis zum Erweichungspunkt der ersten Zusammensetzung, die in dem mindestens einen Teil (12) des mindestens einen Elements (11) vorhanden ist, erhöht wird und ein Anpressdruck zwischen den beiden separaten Blättern (11, 112) ausgeübt wird,
ein vierter Schritt, bei dem eine Zeitspanne abgewartet wird, die ausreicht, damit die beiden separaten und teilweise erweichten Blätter (111, 112) den mindestens einen Teil des elektronischen Geräts (20) zwischen sich einkapseln können,
ein fünfter Schritt, bei dem das mindestens eine Lösungsmittel verdampft wird, um die Zusammensetzung der Mischung in dem mindestens einen Teil (12) des mindestens einen Elements (11) von der ersten in die zweite Zusammensetzung übergehen zu lassen, indem ein Sintern zwischen den beiden Blättern (111, 112) und ein Einkapseln des mindestens einen Teils des elektronischen Geräts (20) innerhalb des mindestens einen Teils (12) des mindestens einen Elements (11) erfolgt, wobei das mindestens eine Lösungsmittel in der ersten Zusammensetzung der Mischung in einer Menge zwischen 5 Massen-% und 25 Massen-% vorliegt,
wobei der Erweichungspunkt der ersten Zusammensetzung niedriger als 90 °C ist,
wobei bei dem dritten Schritt des Verfahrens die beiden Blätter (111, 112) bei einem Druck von 1,5 bis 5 bar verpresst werden.

2. Verfahren nach Anspruch 1, **dadurch gekennzeichnet, dass** der Anteil des mindestens einen Lösungsmittels in der ersten Zusammensetzung der Acetatmischung 10 bis 15 Massen-% beträgt.

3. Verfahren nach einem der vorhergehenden Ansprüche, **dadurch gekennzeichnet, dass** das mindestens eine Lösungsmittel in einer Liste enthalten ist, die mindestens eines von Aceton, Ethanol, Essigsäureethylester und Milchsäureethylester umfasst.

4. Verfahren nach einem der vorhergehenden Ansprüche, **dadurch gekennzeichnet, dass** der Erweichungspunkt der ersten Mischung zwischen 30 °C und 50 °C liegt.

5. Verfahren nach einem der vorhergehenden Ansprüche, **dadurch gekennzeichnet, dass** bei dem dritten Schritt des Verfahrens die beiden Blätter (111, 112) bei einem Druck von weniger als 3 bar verpresst werden.

6. Verfahren nach einem der vorhergehenden Ansprüche, **dadurch gekennzeichnet, dass** es einen Nachherstellungsschritt umfasst, bei dem das mindestens eine Teil (12) des mindestens einen Elements (11) eine Blattform aufweist und während des Trocknens im fünften Schritts abgeflacht wird, nachdem das Blatt im dritten und vierten Schritt des Verfahrens verformt worden ist.

7. Verfahren nach Anspruch 6, **dadurch gekennzeichnet, dass** bei dem Nachherstellungsschritt das mindestens eine Teil (12) des mindestens einen Elements (11) nach dem Trocknen um das verkapselte elektronische Gerät (20) herum bearbeitet wird, um das Element (11) des Rahmens (10) zu realisieren.

8. Verfahren nach einem der vorhergehenden Ansprüche, **dadurch gekennzeichnet, dass** bei dem fünften Schritt der mindestens eine Teil (12) des mindestens einen Elements (11) bei niedrigen Temperaturen getrocknet wird, wobei unter niedrigen Temperaturen Temperaturen verstanden werden, die niedriger sind als die Erweichungstemperatur der ersten Zusammensetzung der Mischung.

9. Verfahren nach einem der vorhergehenden Ansprüche, **dadurch gekennzeichnet, dass** das mindestens eine Element (11) des Brillengestells (10) in einer Liste enthalten ist, die ein Nasenstück, einen Nasensteg und einen Bügel des Brillengestells (10) einschließt.

10. Verfahren nach einem der vorhergehenden Ansprüche, **dadurch gekennzeichnet, dass** das elektronische Gerät (20) vor dem zweiten Schritt des Verfahrens mit einem Schutzmaterial, vorzugsweise Polyurethan, bedeckt wird.

## Revendications

1. Procédé d'encapsulation d'au moins une partie d'un dispositif électronique (20) à l'intérieur d'au moins un élément (11) d'une monture (10) de lunettes,
dans lequel ledit au moins un élément (11) de ladite monture (10) de lunettes est composé d'un mélange d'acétate de cellulose plastifié approprié pour passer d'une première composition à une deuxième composition,
dans lequel ladite première composition dudit mélange d'acétate de cellulose plastifié comprend au moins un solvant dissout dans le mélange,
dans lequel ladite première composition a un point de ramollissement inférieur à un point de ramollissement de l'acétate de cellulose plastifié seul,
dans lequel ladite deuxième composition dudit mélange prévoit qu'au moins une partie (12) dudit au moins un élément (11) au sein duquel ladite au moins une partie dudit dispositif électronique (20) soit incorporée comprend une quantité dudit au moins un solvant inférieure à 2 % en poids,
ledit procédé comprenant
une première étape prévoyant que ledit au moins un élément (11) de la monture (10) de lunettes comprenne deux feuilles (111, 112) distinctes composées de ladite première composition dudit mélange,
une deuxième étape prévoyant l'insertion de ladite au moins une partie dudit dispositif électronique (20) entre lesdites deux feuilles (111, 112) distinctes,
une troisième étape prévoyant d'augmenter une température jusqu'à la température de ramollissement de ladite première composition présente dans ladite au moins une partie (12) dudit au moins un élément (11) et l'application d'une pression de contact entre lesdites deux feuilles (11, 112) distinctes,
une quatrième étape prévoyant d'attendre pendant une période de temps suffisante pour permettre aux deux feuilles (111, 112) distinctes et partiellement ramollies d'encapsuler entre elles ladite au moins une partie dudit dispositif électronique (20),
une cinquième étape prévoyant d'évaporer ledit au moins un solvant pour faire passer la composition du mélange de ladite au moins une partie (12) dudit au moins un élément (11) de la première à la deuxième composition en effectuant un frittage entre les deux feuilles (111, 112) et encapsulant ladite au moins une partie de dispositif électronique (20) à l'intérieur de ladite au moins une partie (12) dudit au moins un élément (11), dans lequel ledit au moins un solvant est présent dans la première composition du mélange en un pourcentage compris entre 5 % et 25 % en masse,
dans lequel la température de ramollissement de ladite première composition est inférieure à 90 °C,
dans lequel la troisième étape du procédé prévoit de comprimer les deux feuilles (111, 112) à une pression comprise entre 1,5 et 5 bar.

2. Procédé selon la revendication 1, **caractérisé en ce que** le pourcentage dudit au moins un solvant dans la première composition du mélange d'acétate est compris entre 10 % et 15 % en masse.

3. Procédé selon l'une quelconque des revendications précédentes, **caractérisé en ce que** ledit au moins un solvant est inclus dans une liste comprenant au moins un élément parmi l'acétone, l'éthanol, l'acétate d'éthyle, le lactate d'éthyle.

4. Procédé selon l'une quelconque des revendications précédentes, **caractérisé en ce que** la température de ramollissement dudit premier mélange est comprise entre 30 °C et 50 °C.

5. Procédé selon l'une quelconque des revendications précédentes, **caractérisé en ce que** la troisième étape du procédé prévoit de comprimer les deux feuilles (111, 112) à une pression de moins de 3 bar.

6. Procédé selon l'une quelconque des revendications précédentes, **caractérisé en ce qu'**il comprend une étape de post-production prévoyant que ladite au moins une partie (12) dudit au moins un élément (11) ait une forme de feuille et est aplatie pendant le séchage de la cinquième étape après que ladite feuille a été déformée par les troisième et quatrième étapes du procédé.

7. Procédé selon la revendication 6, **caractérisé en ce que** ladite étape de post-production prévoit que ladite au moins une partie (12) dudit au moins un élément (11), une fois sèche, soit traitée autour du dispositif électronique (20) encapsulé pour réaliser l'élément (11) de la monture (10).

8. Procédé selon l'une quelconque des revendications précédentes, **caractérisé en ce que** ladite cinquième étape prévoit que ladite au moins une partie (12) dudit au moins un élément (11) soit séchée à basses températures, par basses températures étant entendu des températures inférieures à la température de ramollissement de la première composition du mélange.

9. Procédé selon l'une quelconque des revendications précédentes, **caractérisé en ce que** ledit au moins un élément (11) de monture (10) de lunettes est inclus dans une liste qui prévoit une arcade, un pont, une branche de la monture (10) de lunettes.

10. Procédé selon l'une quelconque des revendications précédentes, **caractérisé en ce que** ledit dispositif électronique (20) est recouvert d'un matériau protecteur, de préférence du polyuréthane, avant la deuxième étape du procédé.
